# EUROPÄISCHE PATENTANMELDUNG

(11) **EP 3 985 141 A1**
(43) Veröffentlichungstag der Anmeldung: **20.04.2022**
(21) Anmeldenummer: 21200676.1
(22) Anmeldetag: 04.10.2021
(51) Int. Cl.: C23C 2/00, C23C 2/26, G01B 11/06, G01B 11/24, G01B 11/245, G01B 11/25, G01B 11/30, G01N 21/88

(54) **VERFAHREN ZUR ERMITTLUNG VON KENNGRÖSSEN AN EINER OBERFLÄCHE EINES BEWEGTEN METALLBANDS**

(30) Priorität: 13.10.2020 DE 102020212904
(71) Anmelder: ThyssenKrupp Steel Europe AG, 47166 Duisburg (DE)
(72) Erfinder: Möller, Thomas, 47199 Duisburg (DE); Kanigowski, Tobias, 44791 Bochum (DE); Nowack, Niklas, 46242 Bottrop (DE)
(74) Vertreter: ThyssenKrupp Steel Europe AG

(57) **Zusammenfassung**

Die Erfindung betrifft Verfahren zur Ermittlung von Kenngrößen an einer Oberfläche (21) eines bewegten Metallbandes (20) mit mindestens einer Einheit (1),
- welche eine Quelle (2) zur Erzeugung eines Strahls (3) und Mittel (4) zur Projektion des Strahls (3) auf die Oberfläche (21) umfasst,
- welche Mittel (5) zur Erfassung der von der Oberfläche (21) reflektierenden Strahlung (3') umfasst, wobei die Einheit (1) mit Mitteln (6) verbunden wird, welche die von dem Mittel (5) erfasste reflektierende Strahlung (3') in Signale konvertiert und die Signale an eine Auswerteeinheit (6) übergeben werden, in welcher ein Algorithmus hinterlegt ist, mit welchem die eingespeisten Signale in Kenngrößen der Oberfläche (21) entlang des bewegten Metallbandes (20) ausgewertet werden, wobei als Quelle (2) eine weiße Lichtquelle verwendet wird, die Einheit (1) einem konfokal-chromatischen Messprinzip unterliegt und als Kenngröße mindestens eine Langwelligkeit entlang der Oberfläche (21) des bewegten Metallbandes (20) bestimmt wird.

## Beschreibung

Die Erfindung betrifft ein Verfahren zur Ermittlung von Kenngrößen an einer Oberfläche eines bewegten Metallbandes mit mindestens einer Einheit,
- welche eine Quelle zur Erzeugung eines Strahls und Mittel zur Projektion des Strahls auf die Oberfläche umfasst,
- welche Mittel zur Erfassung der von der Oberfläche reflektierenden Strahlung umfasst, wobei die Einheit mit Mitteln verbunden wird, welche die von dem Mittel erfasste reflektierende Strahlung in Signale konvertiert und die Signale an eine Auswerteeinheit übergeben werden, in welcher ein Algorithmus hinterlegt ist, mit welchem die eingespeisten Signale in Kenngrößen der Oberfläche entlang des bewegten Metallbandes ausgewertet werden.

Die Anmutung einer Lackierung bei einem Fahrzeug bildet den ersten Eindruck und ist deshalb ein wesentliches Qualitätsmerkmal für heutige Automobile. Die Anforderungen an die Lackierung sind in den vergangenen Jahren kontinuierlich gestiegen. Der Verzicht auf sogenannte Füller im Lackaufbau hat die Anforderungen an den Lack und das mit dem Lack lackierte Blech (Feinblech) noch weiter erhöht. Durch die Einsparung des Füllers werden auch Verarbeitungs- und Prozesskosten beim OEM gesenkt und darüber hinaus im Sinne der Nachhaltigkeit eine weitere Zwischenschicht eingespart. Bei der Beschaffenheit von Stahloberflächen existieren zwei konkurrierende Anforderungen. Einerseits wird für das Verhalten im Presswerk eine bestimmte Rauheit benötigt, da die Verarbeitungsschritte im Umformprozess wie beispielsweise beim Tiefziehen eine gute Schmierung (beispielsweise unter Anwendung von Öl) verlangen, wobei sich das Schmiermittel in den Tälern des rauen Oberflächenprofils ansammeln kann. Andererseits soll die Stahloberfläche möglichst eben sein, damit sich das Strukturprofil, welches vom menschlichen Auge als langwellige Oberflächentopographie wahrgenommen wird, nicht in der Lackschicht abbildet und das Erscheinungsbild beeinträchtigt. Bisher wurde die Topografie einer (Fein-)Blechoberfläche im Wesentlichen durch den Mittenrauwert Ra und die Spitzenzahl RPc beschrieben. Diese Kennwerte sind auch für die Prozesssicherheit bei der Verarbeitung im Presswerk des OEM entscheidend. Für eine bessere Lackierung wurde die Vorgabe der Mittenrauheit abgesenkt und die minimale Spitzenzahl erhöht. Dies stellt zwei Forderungen dar, die allein bei Einsatz von füllerlosen Lacken noch nicht ausreichen. Die Langwelligkeit der (Fein-) Blechoberfläche nach Stahl-Eisen-Prüfblatt (SEP) 1941 ist hier eine neue, zusätzliche Kenngröße, deren Begrenzung für eine gute Lackanmutung erforderlich ist. Neben dem Mittenrauwert (Ra) und der Spitzenzahl (RPc) wird daher zunehmend auch die Langwelligkeit des noch unverformten Bleches vom OEM angefragt und die Einhaltung spezieller Grenzwerte gefordert.

Aus der EP 2 517 799 B1 ist ein Verfahren zum kontaktlosen Messen der Rauheit und Welligkeit an einer sich bewegenden Fläche unter Verwendung eines Lasers bekannt.

Die aus dem Stand der Technik bekannten Systeme nutzen Laser als Lichtquellen, welche im praktischen Einsatz Sicherheitsmaßnahmen (Strahlenschutz) erfordern, um sicher zu stellen, dass vom Laser keine Gefährdung des Bedienpersonals oder der allgemein im Umfeld des eingesetzten Lasers befindliche Personen ausgehen kann. Des Weiteren sind die aus dem Stand der Technik bekannten Vorrichtungen relativ schwer und somit in der Handhabung auch schwergängig sowie kostenintensiver in der mechanischen Installation. Außerdem erfordern diese Systeme einen enormen komplexen Aufbau, wodurch unter anderem eine Vielzahl an internen Sensoren benötigt wird.

Die Aufgabe der Erfindung ist daher, ein Verfahren, insbesondere für den kontinuierlichen Einsatz im Fertigungsprozess zur Verfügung zu stellen, welches auf Laser als Lichtquelle und den damit verbundenen Nachteilen verzichtet und mit einfachen Mitteln relativ kostengünstig umsetzbar ist.

Die Aufgabe wird mit den Merkmalen des Anspruchs 1 gelöst.

Die Erfinder haben festgestellt, dass die Verwendung eines konfokal-chromatischen Messverfahrens mithilfe einer weißen Lichtquelle ausschließlich dann eine Möglichkeit für die kontinuierliche Aufnahme von Langwelligkeitskennwerten in einer Fertigungsanlage darstellt, wenn insbesondere bestimmte Filterverfahren eingesetzt werden. Durch die Verwendung einer weißen Lichtquelle sind keine Schutznahmen wie beispielsweise beim Einsatz von Lasern erforderlich. Auch der Einsatz eines konfokal-chromatischen Messprinzips hat den Vorteil, dass die Sensoreinheit relativ einfach, kompakt und leicht ausgeführt sein kann, ohne aufwendig Massen wie im Vergleich zum Stand der Technik bewegen zu müssen, was das Handling vereinfacht. Des Weiteren wird erfindungsgemäß als Kenngröße mindestens eine Langwelligkeit entlang (in Laufrichtung/Prozessrichtung) der Oberfläche des bewegten Metallbandes bestimmt, so dass in einem Fertigungsprozess quasi in-situ und somit online die Langwelligkeit der Oberfläche an dem Metallband bestimmt werden kann und bei Bedarf Maßnahmen eingeleitet werden können, welche in Laufrichtung des bewegten Metallbands aufwärts regel- und/oder steuerbar sind, so dass die Langwelligkeit auch als mögliche Regel- und/oder Steuergröße anwendbar ist, so dass gewisse Qualitätsanforderungen eingehalten werden können.

Die Oberfläche des bewegten Metallbands wird optisch berührungslos erfasst, wobei als Kenngröße ein Oberflächenprofil gemessen wird, welches als reales Messprofil mittels geeigneten Mitteln respektive Filter in langwellige und kurzwellige Anteile des gemessenen Oberflächenprofils zerlegt werden, so dass die kurzwelligen Anteile die Rauheit und die langwelligen Anteile die Welligkeit widerspiegeln. Insbesondere mittels eines Tiefpassfilters, tiefe Frequenzen werden durchgelassen und hohe rausgefiltert, kann die Welligkeit aus dem gemessenen Oberflächenprofil von der Rauheit getrennt werden bzw. mittels eines Hochpassfilters, hohe Frequenzen werden durchgelassen und tiefe rausgefiltert, kann die Rauheit aus dem gemessenen Oberflächenprofil von der Welligkeit getrennt werden. Das Filter kann digital oder elektronisch das gemessene Oberflächenprofil nach Bedarf unterteilen, wobei primär die Welligkeit respektive Langwelligkeit von Interesse ist. Als Industriestandard hat sich die Welligkeit Wsa (1-5) ― Wave Surface Arithmetric Value ― durchgesetzt, da dieses stark mit der Langwelligkeit korreliert. Mit Anwendung entsprechender Profilfilter lässt sich auch der Wa0,8-Kennwert ermitteln, wobei Wa0,8 ähnlich mit der Langwelligkeit korreliert wie Wsa(1-5), vgl. Wsa(1-5) in SEP 1941.

Das konfokal-chromatische Messprinzip ist ein optisches Messverfahren, welches auf dem Konfokalprinzip sowie dem chromatischen Prinzip basiert, d. h. die strahlerzeugenden und/ oder strahlprojizierenden Mittel im Beleuchtungsstrahlengang und die durch Reflektion strahlaufnehmenden Mittel im Beobachtungsstrahlengang sind konfokal, da sie einen gemeinsamen Brennpunkt besitzen. Weißes Licht als Quelle eignet sich vorteilhaft in Verbindung mit dem chromatischen Messprinzip, da die spektralen Anteile des Lichts durch das oder die Mittel im Beleuchtungsstrahlengang in unterschiedlicher Entfernung bei unterschiedlichen Wellenlängen fokussieren und die von der Oberfläche reflektierte Wellenlänge, welche durch das oder die Mittel im Beobachtungsstrahlengang erfasst wird, erlaubt eine sehr genaue Entfernungsmessung, so dass bevorzugt das konfokale Messprinzip einer optischen Abstandsmessung entspricht. Das konfokal-chromatische Messprinzip respektive die zugrundeliegende optische Abstandsmessung und seine/ihre Funktionsweise sind Stand der Technik.

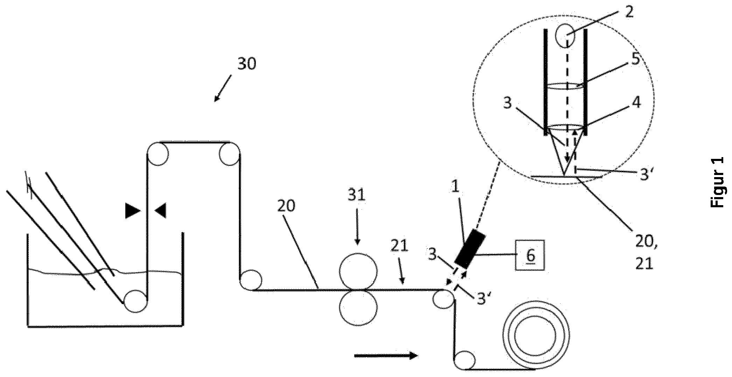

Weitere vorteilhafte Ausgestaltungen und Weiterbildungen gehen aus der nachfolgenden Beschreibung hervor. Ein oder mehrere Merkmale aus den Ansprüchen, der Beschreibung wie auch der Zeichnung können mit einem oder mehreren anderen Merkmalen daraus zu weiteren Ausgestaltungen der Erfindung verknüpft werden. Es können auch ein oder mehrere Merkmale aus den unabhängigen Ansprüchen durch ein oder mehrere andere Merkmale verknüpft werden.

Gemäß einer Ausgestaltung des erfindungsgemäßen Verfahrens wird das bewegte Metallband mit einer Geschwindigkeit größer 0 m/min an der Einheit vorbeigeführt. Das optische berührungslose Messverfahren eignet sich hervorragend zur Online-Messung der Kenngrößen der Oberfläche auch bei höheren Geschwindigkeit des Metallbandes, so dass diese insbesondere mindestens 20 m/min, vorzugsweise mindestens 50 m/min, bevorzugt mindestens 80 m/min.

Gemäß einer Ausgestaltung des erfindungsgemäßen Verfahrens wird die Einheit mit einer Messrate von mindestens 10 kHz betrieben. Dies ermöglicht einen möglichst geringen Abstand zwischen zwei Abstandsmessungen in Verbindung mit dem bewegten Metallband, insbesondere mit einer Messrate von mindestens 20 kHz, vorzugsweise mit mindestens 40 kHz, bevorzugt mit mindestens 50 kHz.

Gemäß einer bevorzugten Ausgestaltung des erfindungsgemäßen Verfahrens wird als Metallband ein unbeschichtetes oder beschichtetes Stahlband verwendet. Auch die Verwendung eines NE-Metallbands, insbesondere eines Aluminiumbands ist denkbar.

Gemäß einer Ausgestaltung des erfindungsgemäßen Verfahrens wird die Langwelligkeit als Parameter zur Steuerung und/oder Regelung eines vor der Ermittlung der Kenngrößen durchgeführten Dressierprozesses verwendet. Ein vorausgegangener Dressierprozess beeinflusst neben der Oberflächentopographie auch die Eigenschaften des Metallbandes, so dass dieser insbesondere bei der Verwendung von Stahlbändern zur Einstellung der mechanischen Eigenschaften und Topographie standardmäßig eingesetzt wird. Das insbesondere beidseitige Dressieren von Metallbändern erfolgt standardmäßig durch Hindurchführen des Metallbandes zwischen den Spalt eines texturierten Dressierwalzenpaares. Die Langwelligkeit zur Beeinflussung des Dressierprozesses als Stellgröße kann daher vorteilhaft verwendet werden. Bevorzug wird neben der Rauheit und Spitzenzahl die Langwelligkeit als Parameter zur Einstellung des Dressiergrades und/oder Bandzuges (Streckrichter) verwendet.

Gemäß einer bevorzugten Ausgestaltung des erfindungsgemäßen Verfahrens wird das Verfahren in einer Schmelztauchbeschichtungsanlage durchgeführt. In einer Schmelztauchbeschichtungsanlage wird ein Metallband, bevorzugt ein Stahlband kontinuierlich mit einem schmelzflüssigen Überzug beschichtet, insbesondere mit einem zinkbasierten Korrosionsschutzüberzug. Das Stahlband mit dem auf dem Stahlband erstarrten Überzug durchläuft einen Dressierprozess bevor zu einem Coil aufgehaspelt und zur Weiterverarbeitung, beispielsweise an einen OEM, weitertransportiert wird. Das Verfahren eignet sich vorteilhaft zur Protokollierung und/oder Visualisierung der Kenngröße der Oberfläche entlang des gesamten Metallbands/Stahlbands, so dass genaue Kenntnis über den Zustand der Kenngrößen vorliegen.

Im Folgenden werden konkrete Ausgestaltungen der Erfindung mit Bezugnahme auf die Zeichnung im Detail näher erläutert. Die Zeichnung und begleitende Beschreibung der resultierenden Merkmale sind nicht beschränkend auf die jeweiligen Ausgestaltungen zu lesen, dienen jedoch der Illustration beispielhafter Ausgestaltung. Weiterhin können die jeweiligen Merkmale untereinander wie auch mit Merkmalen der obigen Beschreibung genutzt werden für mögliche weitere Entwicklungen und Verbesserungen der Erfindung, speziell bei zusätzlichen Ausgestaltungen, welche nicht dargestellt sind.

Die einzige Zeichnung zeigt eine schematische Skizze einer Schmelztauchbeschichtungsanlage (30) und ein Beispiel zur Durchführung des erfindungsgemäßen Verfahrens zur Ermittlung einer Kenngröße an einer Oberfläche (21) eines Metallbandes (20). Bei dem Metallband (20) handelt es sich vorzugsweise um ein Stahlband, welches kontinuierlich mit einem Überzug beschichtet wird, wobei die Geschwindigkeit des Metallbandes (20) durch die Schmelztauchbeschichtungsanlage (30) größer 0 m/min beträgt, insbesondere mindestens 20 m/min. Am Ende der Schmelztauchbeschichtungsanlage in Prozessrichtung betrachtet wird das beschichtete Metallband (20) mittels eines Dressierwalzenpaares (31) dressiert, um eine Topographie auf der Oberfläche (21) des beschichteten Metallbands (20) und ggf. die mechanischen Eigenschaften des Metallbands (20) einzustellen. Die Prozess- bzw. Laufrichtung symbolisiert der dicke Pfeil von links nach rechts.

Zur Ermittlung von Kenngrößen kommt mindestens eine Einheit (1) zur Anwendung, welche eine Quelle (2) zur Erzeugung eines Strahls (3) und Mittel (4) zur Projektion des Strahls (3) auf die Oberfläche (21) umfasst, welche Mittel (5) zur Erfassung der von der Oberfläche (21) reflektierenden Strahlung (3') umfasst, wobei die Einheit (1) mit Mitteln (6) verbunden wird, welche die von dem Mittel (5) erfasste reflektierende Strahlung (3') in Signale konvertiert und die Signale an eine Auswerteeinheit (6) übergeben werden, in welcher ein Algorithmus hinterlegt ist, mit welchem die eingespeisten Signale in Kenngrößen der Oberfläche (21) entlang des bewegten Metallbandes (20) ausgewertet werden. Die Auswerteinheit (6) ist mit weiteren nicht dargestellten Mitteln verbunden, welche zur Visualisierung, beispielsweise als Ergebnis auf einem Monitor dem Bedienpersonal angezeigt werden kann, und/oder zur Protokollierung, welche quasi als Mitschrift bzw. als Dokumentation für den Endnutzer dient, und/oder zur Steuer-/Regelung weiterer Prozesse integriert sein kann.

Erfindungsgemäß wird als Quelle (2) eine weiße Lichtquelle verwendet. Des Weiteren unterliegt die Einheit (1) zudem einem konfokal-chromatischen Messprinzip und als Kenngröße wird mindestens eine Langwelligkeit entlang der Oberfläche (21) des bewegten Metallbandes (20) bestimmt.

Die Einheit (1) wird mit einer Messrate von mindestens 10 kHz und höher, besonders bevorzugt 70 kHz und höher, betrieben, welche insbesondere in Verbindung mit der Geschwindigkeit von größer 0 m/min, insbesondere mindestens 20 m/min zu einem möglichst geringen Abstand zwischen zwei Abstandsmessungen beitragen kann.

Insbesondere kann die Langwelligkeit als Parameter zur Steuerung und/oder Regelung eines vor der Ermittlung der Kenngrößen durchgeführten Dressierprozesses verwendet, vorzugsweise als Parameter zur Einstellung des Dressiergrades dienen.

Die Erfindung ist nicht auf beschichtete Metallbänder beschränkt, sondern kann auch bei unbeschichteten Metallbändern Anwendung finden, insbesondere auch in Zusammenhang mit einem Dressierprozess und einem anschließenden Beschichten mit einem Überzug, so wie es beispielsweise standardmäßig in einer kontinuierlichen elektrolytischen Beschichtungsanlage durchgeführt wird.

## Patentansprüche

1. Verfahren zur Ermittlung von Kenngrößen an einer Oberfläche (21) eines bewegten Metallbandes (20) mit mindestens einer Einheit (1),
- welche eine Quelle (2) zur Erzeugung eines Strahls (3) und Mittel (4) zur Projektion des Strahls (3) auf die Oberfläche (21) umfasst,
- welche Mittel (5) zur Erfassung der von der Oberfläche (21) reflektierenden Strahlung (3') umfasst, wobei die Einheit (1) mit Mitteln (6) verbunden wird, welche die von dem Mittel (5) erfasste reflektierende Strahlung (3') in Signale konvertiert und die Signale an eine Auswerteeinheit (6) übergeben werden, in welcher ein Algorithmus hinterlegt ist, mit welchem die eingespeisten Signale in Kenngrößen der Oberfläche (21) entlang des bewegten Metallbandes (20) ausgewertet werden,
**dadurch gekennzeichnet, dass** als Quelle (2) eine weiße Lichtquelle verwendet wird, die Einheit (1) einem konfokal-chromatischen Messprinzip unterliegt und als Kenngröße mindestens eine Langwelligkeit entlang der Oberfläche (21) des bewegten Metallbandes (20) bestimmt wird.

2. Verfahren nach Anspruch 1, wobei das bewegte Metallband mit einer Geschwindigkeit von mindestens 20 m/min an der Einheit (1) vorbeigeführt wird.

3. Verfahren nach einem der vorhergehenden Ansprüche, wobei die Einheit mit einer Messrate von mindestens 10 kHz betrieben wird.

4. Verfahren nach einem der vorhergehenden Ansprüche, wobei als Metallband ein NE-Metallband oder ein unbeschichtetes oder ein beschichtetes Stahlband verwendet wird.

5. Verfahren nach einem der vorhergehenden Ansprüche, wobei die Langwelligkeit als Parameter zur Steuerung und/oder Regelung eines vor der Ermittlung der Kenngrößen durchgeführten Dressierprozesses verwendet wird.

6. Verfahren nach Anspruch 5, wobei die Langwelligkeit als Parameter zur Einstellung des Dressiergrades und/oder Bandzuges verwendet wird.

7. Verfahren nach einem der vorhergehenden Ansprüche, wobei das Verfahren in einer Schmelztauchbeschichtungsanlage durchgeführt wird.
